# EUROPÄISCHE PATENTANMELDUNG

(11) **EP 0 987 136 A2**
(43) Veröffentlichungstag der Anmeldung: **22.03.2000**
(21) Anmeldenummer: 99116442.7
(22) Anmeldetag: 21.08.1999
(51) Int. Cl.: B60K 15/077

(54) **Kraftstoffbehälter für ein Kraftfahrzeug**

(30) Priorität: 16.09.1998 DE 19842336
(71) Anmelder: Mannesmann VDO Aktiengesellschaft, 60388 Frankfurt am Main (DE)
(72) Erfinder: Gette, Christophe, 54300 Luneville (FR); Bouton, Stéphane, 57380 Pontpierre (FR); Korst, Otto, 56414 Herschbach (DE)
(74) Vertreter: Klein, Thomas, Dipl.-Ing.

(57) **Zusammenfassung**

In einem Kraftstoffbehälter (1) für ein Kraftfahrzeug ist ein Träger (12) eines Füllstandssensors (8) einteilig mit einer Wandung des Schwalltopfes (4) gefertigt. Hierdurch setzt sich der Kraftstoffbehälter (1) aus einer sehr geringen Anzahl von Bauteilen zusammen und läßt sich besonders einfach montieren. Im Bereich einer Lagerung für einen einen Schwimmer (10) tragenden Hebelarm (9) ist der Träger (12) von dem Schwalltopf (4) beabstandet. Hierdurch kann der Hebelarm (9) die Lagerung umgreifen. Der Füllstandssensor (8) hat hierdurch eine hohe Stabilität.

## Beschreibung

Die Erfindung betrifft einen Kraftstoffbehälter für ein Kraftfahrzeug mit einem in seinem Bodenteil angeordneten Schwalltopf und mit einem Füllstandssensor zur Ermittlung eines Füllstandes an Kraftstoff im Kraftstoffbehälter, wobei der Füllstandssensor einen auf einem Träger schwenkbar gelagerten, einen Schwimmer tragenden Hebelarm aufweist.

Solche Kraftstoffbehälter werden in der Regel aus Kunststoff im Spritzgußverfahren oder im Blasverfahren hergestellt. In dem Kraftstoffbehälter ist unter anderem eine Fördereinheit angeordnet, mit der der Kraftstoff aus dem Kraftstoffbehälter zur Brennkraftmaschine gefördert wird. Die Fördereinheit besitzt als wesentliche Bauelemente einen Schwalltopf, in dem eine Kraftstoffpumpe angeordnet ist. Der Füllstandssensor wird meist vormontiert und anschließend in den Kraftstoffbehälter eingesetzt. Der Träger des Füllstandssensors weist Rasthaken auf, mit denen er an entsprechend gestalteten Haken der Wandung des Kraftstoffbehälters verklipst werden kann.

Nachteilig bei dem Kraftstoffbehälter ist, daß er aus sehr vielen zu montierenden Bauteilen besteht. Hierdurch erfordert der Kraftstoffbehälter eine aufwendige Logistik für die vorrätig zu haltenden Bauteile und eine kostenintensive Montage.

Der Erfindung liegt das Problem zugrunde, einen Kraftstoffbehälter der eingangs genannten Art so zu gestalten, daß er möglichst kostengünstig hergestellt werden kann.

Dieses Problem wird erfindungsgemäß dadurch gelöst, daß der Träger einteilig mit einer Wandung des Schwalltopfes oder mit einem anderen gegen den Boden des Kraftstoffehälters vorgespannten Bauteil einer Fördereinheit gestaltet ist.

Durch diese Gestaltung erfordert der erfindungsgemäße Kraftstoffbehälter besonders wenig Bauteile. Der Hebelarm des Füllstandssensors kann hierdurch unmittelbar in den Kraftstoffbehälter eingesetzt werden oder vor der Montage der Fördereinheit in dem Kraftstoffbehälter an dieser befestigt werden. Die einteilige Gestaltung des Trägers mit dem Schwalltopf oder einem Bauteil der Fördereinheit führt zu einer Vereinfachung der Fertigung des erfindungsgemäßen Kraftstoffbehälters, da keine Rasthaken oder dergleichen zur Befestigung des Trägers erforderlich sind. Hierdurch gestaltet sich die Fertigung des Kraftstoffbehälters besonders kostengünstig.

Ein Umgreifen des Hebelarms im Bereich seiner Lagerung am Träger läßt sich gemäß einer anderen vorteilhaften Weiterbildung der Erfindung einfach erreichen, wenn eine Lagerung für den Hebelarm von dem Schwalltopf oder einem anderen Bauteil der Fördereinheit beabstandet ist. Durch diese Gestaltung hat der Füllstandssensor eine sehr hohe mechanische Stabilität.

Der Schwenkwinkel des Hebelarms ist abhängig von einem Füllstand an Kraftstoff im Kraftstoffbehälter und wird von einem Potentiometer des Füllstandssensors erfaßt. Elektrische Leitungen für den Füllstandssensor lassen sich gemäß einer anderen vorteilhaften Weiterbildung der Erfindung einfach verlegen, wenn auf dem Träger Klemmeinrichtungen zur Halterung von elektrischen Leitungen angeordnet sind.

Meist trägt der Hebelarm Schleifkontakte des Potentiometers. Die Schleifkontakte gleiten damit bei einem Verschwenken des Hebelarms über auf dem Träger angeordnete Schleifbahnen. Eine Befestigung der Schleifbahnen des Potentiometers gestaltet sich gemäß einer anderen vorteilhaften Weiterbildung der Erfindung besonders einfach, wenn der Träger Führungselemente zum Übergreifen eines eine Schleifbahn des Potentiometers tragenden Halteteils aufweist.

Zur weiteren Vereinfachung der Montage des Potentiometers an dem Träger des Füllstandssensors trägt es gemäß einer anderen vorteilhaften Weiterbildung der Erfindung bei, wenn das die Schleifbahn tragende Halteteil von einteilig mit dem Träger gefertigten Federelementen gegen einen Anschlag vorgespannt ist.

Das Halteteil des Potentiometers könnte beispielsweise mit dem Träger verschraubt sein. Zur weiteren Verringerung der Anzahl der Bauteile des erfindungsgemäßen Kraftstoffbehälters trägt es jedoch bei, wenn der Träger federnde, das Halteteil hintergreifende Rasthaken hat.

Die Erfindung läßt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig.1: einen Teilschnitt durch einen erfindungsgemäßen Kraftstoffbehälter,
- Fig.2: eine perspektivische Darstellung eines Füllstandssensors des Kraftstoffbehälters aus Figur 1,
- Fig.3: eine Ansicht auf einen Träger des Füllstandssensors aus Figur 2.

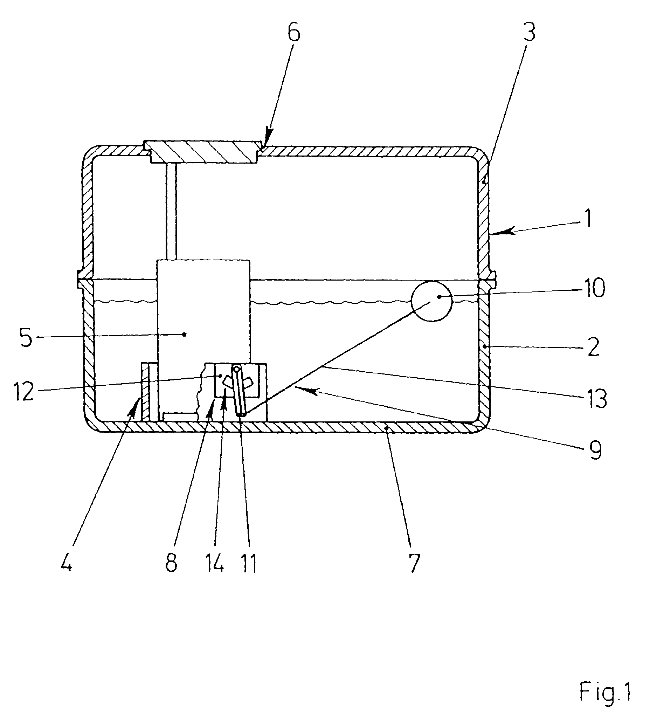

Die Figur 1 zeigt einen aus Kunststoff im Spritzgußverfahren gefertigten Kraftstoffbehälter 1. Der Kraftstoffbehälter 1 setzt sich aus zwei miteinander verschweißten Halbschalen 2, 3 zusammen und hat in seinem Bodenbereich einen Schwalltopf 4. Die obere Halbschale 3 weist eine zum Einführen einer Fördereinheit 5 in den Kraftstoffbehälter 1 vorgesehene Öffnung 6 auf. Die Fördereinheit 5 ist gegen den Boden 7 des Kraftstoffbehälters 1 vorgespannt und saugt Kraftstoff aus dem Schwalltopf 4 an. Weiterhin hat der Kraftstoffbehälter 1 einen Füllstandssensor 8 mit einem an einem Hebelarm 9 befestigten Schwimmer 10. Der Hebelarm 9 ist mit einem Kunststoffbügel 11 an einem an der Außenseite des Schwalltopfes 4 befestigten Träger 12 schwenkbar gelagert und trägt mit einem Bügeldraht 13 den Schwimmer 10. Der Schwimmer 10 folgt einem Kraftstoffspiegel im Kraftstoffbehälter 1 und verschwenkt den Hebelarm 9. Der Schwenkwinkel des Hebelarms 9 wird von einem Potentiometer 14 erfaßt.

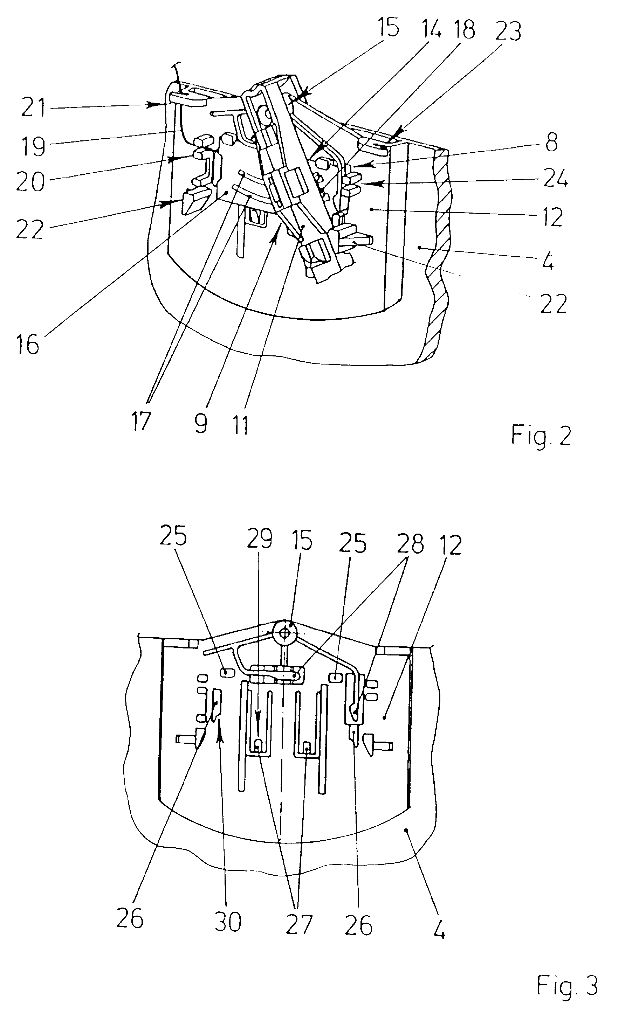

Figur 2 zeigt die an dem Schwalltopf 4 angeordneten Bauteile des Füllstandssensors 8 in einer stark vergrößerten perspektivischen Darstellung. Zur Vereinfachung der Zeichnung ist der Bügeldraht 13 aus Figur 1 nicht dargestellt. Der Träger 12 des Füllstandssensors 8 ist einteilig mit dem Schwalltopf 4 gefertigt. Im Bereich einer Lagerung 15 für den Hebelarm 9 weist der Träger 12 einen Abstand von dem Schwalltopf 4 auf. Hierdurch kann der Kunststoffbügel 11 des Hebelarms 9 den Träger 4 hintergreifen. Der Füllstandssensor 8 hat hierdurch eine hohe Stabilität. Der Potentiometer 14 hat zwei auf einem Halteteil 16 des Trägers 12 angeordnete Schleifbahnen 17. Über die Schleifbahnen 17 gleitet ein an dem Kunststoffbügel 11 befestigter Doppelkontakt 18. Der Füllstandssensor 8 ist über elektrische Leitungen 19 mit einem nicht dargestellten Bordnetz des Kraftfahrzeugs verbunden. Die elektrischen Leitungen 19 sind von einteilig mit dem Träger 12 des Füllstandssensors 8 gefertigten Klemmeinrichtungen 20, 21 gehalten. Auf dem Träger 12 sind beispielsweise für einen nicht dargestellten Füllstandsgrenzschalter weitere Klemmeinrichtungen 23, 24 angeordnet. Anschläge 22 dienen der Begrenzung der Schwenkbewegung des Kunstoffbügels 11. Dabei erlaubt der linke Anschlag 22 mit der Klemmeinrichtung 20 ebenfalls das Halten der elektrischen Leitungen 19.

Die Figur 3 zeigt den Träger 12 des Füllstandssensors 8 aus Figur 1 in einer Ansicht von vorne. Zur Vereinfachung sind der Kunststoffbügel 11 und das Halteteil 16 mit den Schleifbahnen 17 aus Figur 2 nicht dargestellt. Mit dem Träger 12 sind Führungselemente 25, 26, Rasthaken 27 und Federelemente 28 einteilig gefertigt. Die Führungselemente 25, 26 dienen zur Vereinfachung der Montage des in Figur 2 dargestellten Halteteils 16 und übergreifen dieses in der montierten Position. Die Rasthaken 27 sichern das Halteteil 16 gegen ein Herausfallen. Die Federelemente 28 spannen das Halteteil 16 gegen in den Führungselementen 25, 26 und an den Rasthaken 27 angeordnete Anschläge 29, 30 vor.

## Patentansprüche

1. Kraftstoffbehälter für ein Kraftfahrzeug mit einem in seinem Bodenbereich angeordneten Schwalltopf und mit einem Füllstandssensor zur Ermittlung eines Füllstandes an Kraftstoff im Kraftstoffbehälter, wobei der Füllstandssensor einen auf einem Träger schwenkbar gelagerten, einen Schwimmer tragenden Hebelarm aufweist, **dadurch gekennzeichnet**, daß der Träger (12) einteilig mit einer Wandung des Schwalltopfes (4) oder mit einem gegen den Boden (7) des Kraftstoffbehälters (1) vorgespannten Bauteil einer Fördereinheit (5) gestaltet ist.

2. Kraftstoffbehälter nach Anspruch 1, **dadurch gekennzeichnet**, daß eine Lagerung (15) für den Hebelarm (9) von dem Schwalltopf (4) oder dem Bauteil der Fördereinheit (5) beabstandet ist.

3. Kraftstoffbehälter nach Anspruch 1 oder 2, **dadurch gekennzeichnet**, daß auf dem Träger (12) Klemmeinrichtungen (20, 21, 23, 24) zur Halterung von elektrischen Leitungen (19) angeordnet sind.

4. Kraftstoffbehälter nach zumindest einem der vorhergehenden Ansprüche, **dadurch gekennzeichnet**, daß der Träger (12) Führungselemente (25, 26) zum Übergreifen eines eine Schleifbahn (17) des Potentiometers (14) tragenden Halteteils (16) aufweist.

5. Kraftstoffbehälter nach zumindest einem der vorhergehenden Ansprüche, **dadurch gekennzeichnet**, daß das die Schleifbahn (17) tragende Halteteil (16) von einteilig mit dem Träger (12) gefertigten Federelementen (28) gegen einen Anschlag (29, 30) vorgespannt ist.

6. Kraftstoffbehälter nach zumindest einem der vorhergehenden Ansprüche, **dadurch gekennzeichnet**, daß der Träger (12) federnde, das Halteteil (16) hintergreifende Rasthaken (27) hat.
